# EUROPEAN PATENT APPLICATION

(11) **EP 0 974 958 A1**
(43) Date of publication of application: **26.01.2000**
(21) Application number: 99901934.2
(22) Date of filing: 03.02.1999
(51) Int. Cl.: G11B 7/00, G11B 7/085, G11B 7/095

(54) **OPTICAL DISC DEVICE**

(30) Priority: 06.02.1998 JP 2580098
(71) Applicant: Sanyo Electric Co., Ltd., Moriguchi-shi, Osaka-fu 570-8677 (JP)
(72) Inventor: ASANO, Kenji c/o Sanyo Electric Co. Ltd., Moriguchi-shi, Osaka 570-8677 (JP)
(74) Representative: Glawe, Delfs, Moll & Partner
(86) International application number: JP9900450
(87) International publication number: WO9940576

(57) **Abstract**

To detect discontinuous grooves (4) formed in lands (2) at predetermined intervals or discontinuous lands (5) formed in grooves (3) at predetermined intervals, an optical head (11) has sensors (61, 62) divided in a track direction (10) and outputting a differential signal (DF) used to determine whether a track being scanned is a land (2) or a groove (3).

In track-jumping, after tracks are jumped a determination circuit (16) outputs a determination signal (LG) and tracking servo control is responsively initiated for an objective lens (113).

## Description

### Technical Field

The present invention relates to optical disk devices and more specifically to an optical disk device recording and/or reproducing information on/from an optical disk of a land-and-groove system having a specific structure.

### Background Art

Magneto-optical (MO) disk has been noted as a recording medium which is rewritable, of large storing capacity and highly reliable, and it has also been put to practical use as computer memory and the like. Further, a magneto-optical disk with a storage capacity of 6.0 G bytes is also being standardized.

Furthermore, a signal reproduction technique though magnetic-domain enlargement has also been developed. According to this technique, a signal is reproduced from a magneto-optical disk by applying an alternating field to enlarge a magnetic domain transferred from a recording layer to a reproduction layer. This technique has allowed a magneto-optical disk capable of recording or reproducing a signal of 14 G bytes to be proposed.

This magneto-optical disk is structured to have spirally or coaxially arranged tracks formed of lands and grooves both capable of recording or reproducing signals to enhance the recording density of the disk.

To rapidly access a desired address of such a magneto-optical disk, an optical head is rapidly moved radially on the magneto-optical disk to allow a laser beam to jump multiple tracks. In the track-jump, a tracking error signal generated when a laser beam traverses a track is detected to count the number of traversed tracks, and tracking servo control is resumed when the laser beam reaches a desired track.

Accurately counting the number of tracks traversed in track-jumping is, however, not always easy since a laser beam traverses a multitude of tracks rapidly. Consequently, tracking servo control will be disadvantageously resumed while the laser beam has not yet reached a desired track. For example, despite an instruction issued from a system to track-jump to a land N tracks distant, tracking servo control may be resumed when a laser beam reaches a groove. In this case, tracking servo control will first be resumed at the groove and then at the land. Accordingly the linear actuator for transporting the optical head will receive acceleration voltage twice. As a result, the laser beam can jump over the desired land.

### Disclosure of the Invention

An object of the present invention is to provide an optical disk device capable of determining whether a laser beam illuminates a land or a groove.

Another object of the present invention is to provide an optical disk device capable of distinguishing between a land and a groove to provide accurate and rapid track-jump.

In one aspect of the present invention, an optical disk device is comprised of a motor, an optical head, a detection circuit, and a determination circuit. The motor rotates an optical disk. The optical head scans a track of the motor-rotated optical disk with a laser beam to pick up a light reflected from the optical disk. In response to a signal output film the optical head the detection circuit detects a structure specific to a land or a groove. In response to a signal output from the detection circuit the determination circuit determines whether the optical head is scanning a land or a groove.

Preferably the optical disk device is also comprised of an actuator and a tracking servo unit. The actuator moves the optical head radially on an optical disk. The tracking servo unit moves an objective lens provided in the optical head radially on the optical disk so that a laser beam traces a track. After the actuator moves the optical head and allows the laser beam to jump a track, depending on a result of a determination made by the determination circuit the tracking servo unit starts to operate.

The optical disk device can detect a structure specific to a land or a groove to determine whether a laser beam is running on a land or a groove so as to provide rapid and accurate track-jump.

### Brief Description of the Drawings

Fig. 1 is a perspective view of a structure of a magneto-optical disk subjected to recording/reproduction via a magneto-optical disk device of an embodiment of the present invention.
Fig. 2 is a block diagram showing a configuration of a magneto-optical disk device of an embodiment of the present invention.
Fig. 3 shows a specific configuration of the optical detector and operation circuit shown in Fig. 2.
Fig. 4A is a plan view showing the Fig. 1 magneto-optical disk's groove scanned by a laser beam, and Fig. 4B is a waveform diagram representing a differential signal output from the subtraction circuit shown in Fig. 3 when a laser beam scans a groove, as shown in Fig. 4A.
Fig. 5A is a plan view showing the Fig. 1 magneto-optical disk's land scanned by a laser beam, and Fig. 5B is a waveform diagram representing a differential signal output from the subtraction circuit shown in Fig. 3 when a laser beam scans a land, as shown in Fig. 5A.
Fig. 6 is a block diagram showing a specific configuration of the determination circuit shown in Fig. 2.
Fig. 7 is a timing diagram representing an operation of the operation circuit and determination circuit shown in Fig. 2.
Fig. 8 is a flow chart representing a track jump operation via the CPU shown in Fig. 2.
Fig. 9 shows a track jump operation performed by the Fig. 2 magneto-optical disk device.
Fig. 10 is a waveform diagram representing a determination signal output from the determination circuit of Fig. 2 during the track jump operation shown in Fig. 9.
Fig. 11A is a plan view showing a land or groove of a magneto-optical disk structurally different from that shown in Fig. 1 that is illuminated with a laser beam, Fig. 11B is a waveform diagram representing a differential signal output from the subtraction circuit of Fig. 3 when a laser beam illuminates a land, as shown in Fig. 11A, and Fig. 11C is a waveform diagram representing a differential signal output from the subtraction circuit of Fig. 3 when a laser beam scans a groove, as shown in Fig. 11A.
Fig. 12 is a block diagram showing a specific configuration of a determination circuit disposed to distinguish between a land and a groove in such a magneto-optical disk as shown in Fig. 11A.
Fig. 13 is a waveform diagram representing an operation of the determination circuit shown in Fig. 12.
Fig. 14A is a plan view showing a groove or land of still another magneto-optical disk structured differently from that shown in Fig. 1 that is scanned by a laser beam, Fig. 14B is a waveform diagram representing a differential signal output from the subtraction circuit of Fig. 3 when a laser beam scans a groove, as shown in Fig. 14A, and Fig. 14C is a waveform diagram representing a differential signal output from the subtraction circuit of Fig. 3 when a laser beam scans a land, as shown in Fig. 14A.
Fig. 15 is a block diagram showing a specific configuration of a determination circuit disposed to discriminate between a land and a groove in such a magneto-optical disk as shown in Fig. 14A.
Fig. 16 is a timing diagram representing an operation of the Fig. 15 determination circuit.
Fig. 17 is a plan view showing a magneto-optical disk with a fine clock mark formed on each of opposite sidewalls of a groove.
Fig. 18 is a plan view showing a magneto-optical disk with a fine clock mark formed on one of the sidewalls of a groove.
Fig. 19 shows a configuration of a optical detector and operation circuit disposed to discriminate between a land and a groove in such magneto-optical disks as shown in Figs. 17 and 18.

### Best Modes for Carrying Out the Invention

Hereinafter the embodiments of the present invention will be specifically described with respect to the drawings. It should be noted that identical or corresponding portions in the figures are denoted by same reference characters and a description thereof will not be repeated.

### First Embodiment

Before describing a magneto-optical disk device according to an embodiment of the present invention, description will first be made with respect to a structure of a magneto-optical disk subjected to recording/reproduction.

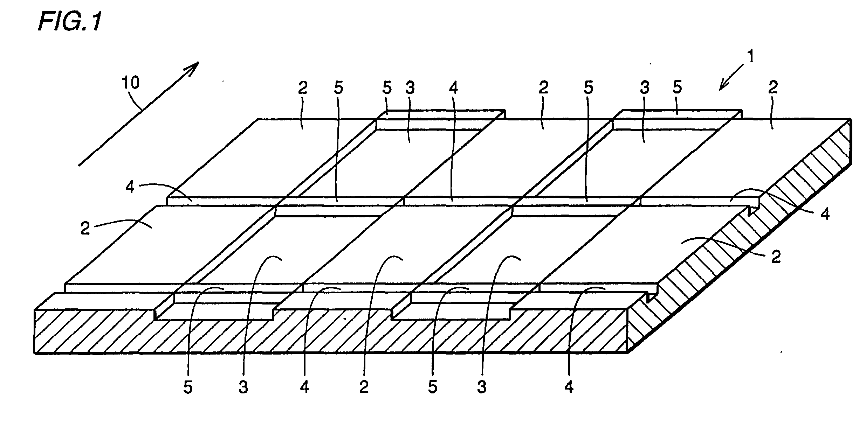

As shown in Fig. 1, a magneto-optical disk 1 has grooves 3 formed spirally or coaxially and hence lands 2 formed between adjacent grooves 3. In magneto-optical disk 1 of a land-and-groove system, a magnetic film for magneto-optical recording is formed for both land 2 and groove 3. Thus, land 2 and groove 3 form tracks of magneto-optical disk 1.

Groove 3 is discontinuous at predetermined intervals, rather than continuously formed. More specifically, lands 5 which are short in length are formed in groove 3 at the predetermined intervals. Such land 5 will be referred to as a "discontinuous" land 5 to discriminate land 5 from normal land 2. Land 2 is also discontinuous at predetermined intervals, rather than continuously formed. More specifically, grooves 4 which are short in length are formed in land 2 at the predetermined intervals. Such groove 4 will be referred to as a "discontinuous" groove 4 to discriminate groove 4 from normal groove 3.

Land 2 and groove 3 are approximately equal in width, approximately 0.6 µm wide. Groove 3 has a depth of approximately one sixth to one eighth of a wave length of a laser beam. Discontinuous grooves 4 and discontinuous lands 5 are formed at intervals of approximately 100 µm and have a length in a track direction (a direction of a tangent line of a track) 10 of approximately 1 µm, which is approximately equal to a diameter of a laser beam spot. Signals are recorded on normal grooves 3 and lands 2 rather than discontinuous grooves 4 and lands 5.

When a laser beam illuminates land 2 or groove 3 having the specific structure as described above the light reflected therefrom periodically varies in intensity due to discontinuous groove 4 and land 5. Such reflected light with a periodically varying intensity is detected to produce a synchronization signal in response to which a signal is recorded or reproduced on or from magneto-optical disk 1.

A description will now be made of a configuration of an optical disk device used to record or reproduce a signal on/from magneto-optical disk 1 as described above.

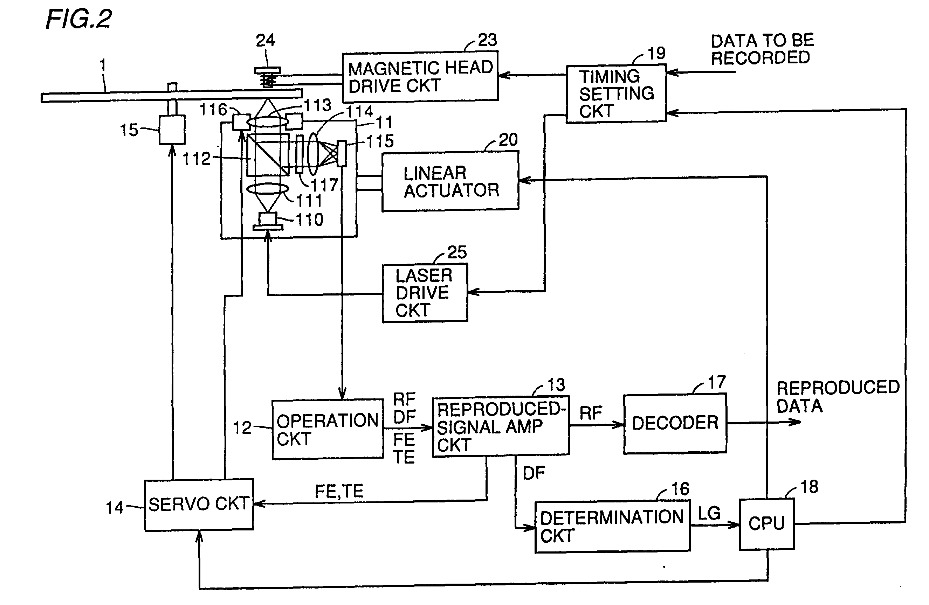

Referring to Fig. 2, the optical disk device according to a first embodiment of the present invention is comprised of: a spindle motor 15 rotating magneto-optical disk 1 at a predetermined rotation rate; an optical head 11 radiating a laser beam to scan a track (2, 3) of magneto-optical disk 1 rotated by spindle motor 15 to pick up a light reflected from disk 1; an operation circuit 12 responding to a signal output from optical head 11 by producing a reproduced signal RF, a differential signal DF (described later), a focus error signal FE and a tracking error signal TE; a reproduced-signal amplifying circuit 13 amplifying signals RF, DF, FE and TE; a servo circuit 14 responding to amplified signals FE and TE by providing servo control of spindle motor 15 and optical head 11; a determination circuit 16 responding to amplified differential signal DE from reproduced-signal amplifying circuit 13 by determining whether optical head 11 is scanning land 2 or groove 3 to generate a determination signal LG accordingly; a central processing unit (CPU) 18 responding to determination signal LG by controlling servo circuit 14, a timing setting circuit 19 and a linear actuator 20; a decoder 17 decoding reproduced signal RF from reproduced-signal amplifying circuit 13 to output reproduced data; timing setting circuit 19 using recorded data modulated according to a predetermined modulation system to generate a timing pulse for driving a magnetic head drive circuit 23 and a timing pulse for driving a laser drive circuit 25; magnetic head drive circuit 23 driving a magnetic head 24 according to the timing pulse from timing setting circuit 19; laser drive circuit 25 driving a semiconductor laser 110 provided in optical head 11 in response to the timing pulse from timing setting circuit 19; magnetic head 24 applying a magnetic field to magneto-optical disk 1 in recording a signal; and a linear actuator 20 moving optical head 11 in a tracking or radial direction of magneto-optical disk 1.

Optical head 11 includes: semiconductor laser 110 producing a laser beam; a collimator lens 111 collimating the laser beam from semiconductor laser 110; a laser beam splitter 112 transmitting the laser beam from semiconductor laser 110 straight ahead and also reflecting a reflected light from magneto-optical disk 1 by approximately 90°; an objective lens 113 focusing the laser beam from semiconductor laser 110 onto disk 1; a Wollaston prism 117 resolving the laser beam reflected from disk 1 and further reflected by laser beam splitter 112 to obtain the three of a P polarization component, an S polarization component and a mixture of P and S polarization components; a collective lens 114 collecting the three laser beams from Wollaston prism 117; a photodetector 115 detecting the collected, reflected light; and a tracking actuator 116 responding to a control signal from servo circuit 14 by moving objective lens 113 in the tracking direction so that the laser beam constantly traces track (2, 3) of disk 1. Herein, servo circuit 14 and tracking actuator 116 configure a tracking servo unit which provides tracking servo control.

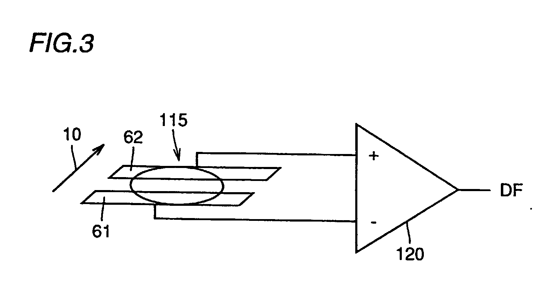

Photodetector 115 is divided into two sensors 61 and 62, as shown in Fig. 3. Sensors 61 and 62 are aligned in track direction 10. Operation circuit 12 includes a subtraction circuit 120 operating a difference between signals output from sensors 61 and 62 to produce differential signal DF. The output from sensor 61 is input to an inversion and amplification terminal (-) of subtraction circuit 120, and the output from sensor 62 is input to a non-inversion and amplification terminal (+) of subtraction circuit 120. Thus, subtraction circuit 120 can use to a signal output from optical head 11 to detect a specific structure, such as discontinuous groove 4, discontinuous land 5. This will be described below more specifically.

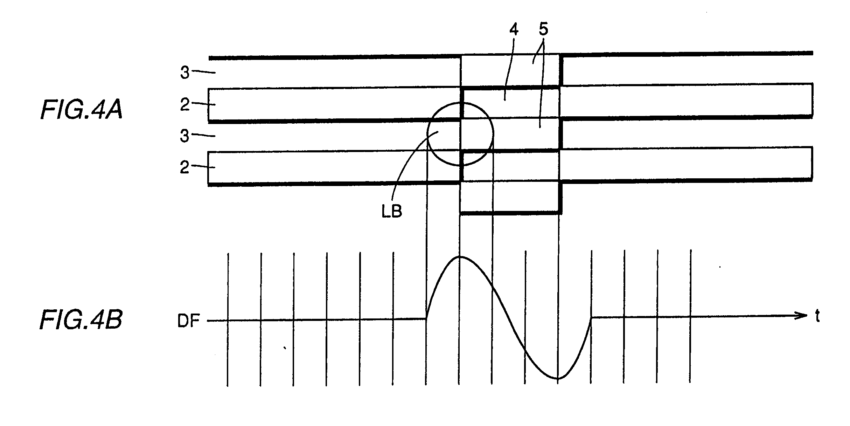

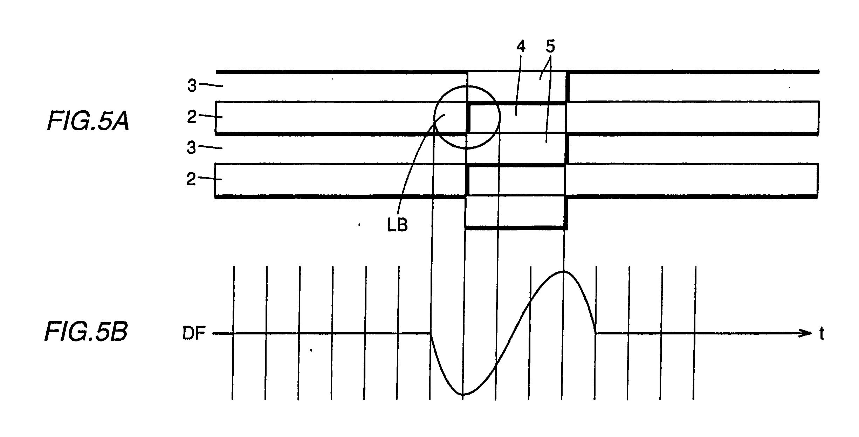

As shown in Fig. 4A, when a laser beam LB running on groove 3 reaches discontinuous land 5, the output from front sensor 62 initially increases in level and differential signal DF thus increases in level, as represented in Fig. 4B. Differential signal DF is maximized in level when the center of laser beam LB reaches the front edge of discontinuous land 5. Thereafter, the output from rear sensor 61 also increases in level and differential signal DF thus decreases in level, and differential signal DF is minimized in level when the center of laser beam LB reaches the rear edge of discontinuous land 5. When laser beam LB passes discontinuous land 5, differential signal DF has its level returned to zero. Thus, laser beam LB running on groove 3 provides differential signal DF which is first maximized and then minimized.
By contrast, laser beam LB running on land 2 and passing across discontinuous groove 4, as shown in Fig. 5A, provides differential signal DF which is first minimized and then maximized, as shown in Fig. 5B.

Description will now be made of a configuration and operation of determination circuit 16 using such differential signal DF to determine whether laser beam LB is running on land 2 or groove 3.

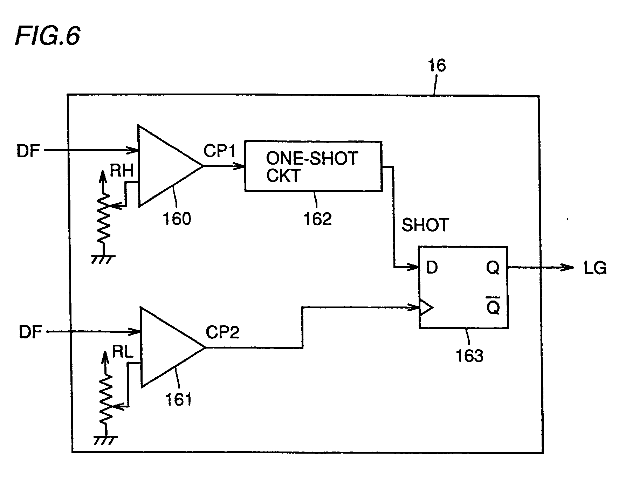

Referring to Fig. 6, determination circuit 16 includes a comparator 160 comparing differential signal DF level with a reference level RH, a comparator 161 comparing differential signal DF level with a reference level RL lower than reference level RH, a one-shot circuit 162 synchronized with a signal CP1 output from comparator 160 to generate a one-shot pulse signal SHOT of a predetermined width, and a delay (D)-type latch circuit 163 synchronized with a signal CP2 output from comparator 161 to latch one-shot pulse signal SHOT from one-shot circuit 162 to produce a determination signal LG.

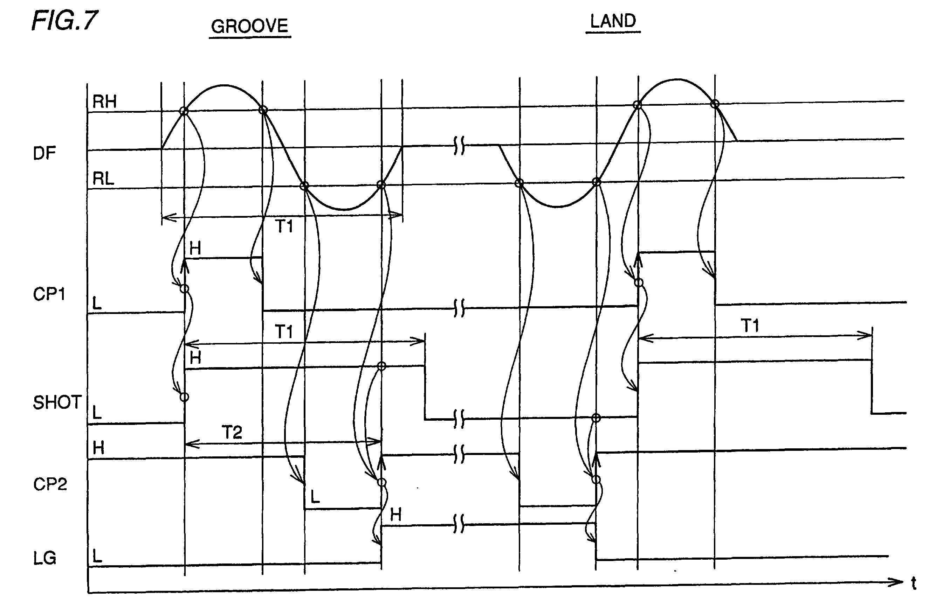

Initially, with laser beam LB running on groove 3, when differential signal DF level exceeds reference level RH, as represented in Fig. 7, signal CP output from comparator 160 goes logical high. Then, when differential signal DF level drops below reference level RH, output signal CP1 returns logical low. One-shot pulse signal SHOT generated by one-shot circuit 162 goes high in response to the rise of output signal CP1. One-shot pulse signal SHOT has a width T1 set to be equal to one cycle T1 of differential signal DF produced when laser beam LB passes across discontinuous land 5. Then, when differential signal DF level drops below reference level RL, signal CP2 output from comparator 161 goes low. Then, when differential signal DF level exceeds reference level RL, output signal CP2 returns high. Since output signal CP2 is applied to latch circuit 163 as a clock signal, the logical level of one-shot pulse signal SHOT when output signal CP2 rises is latched by latch circuit 163. Herein, a time T2 from the rise of output signal CP1 to that of output signal CP2 is always shorter than pulse width T1 of one-shot pulse signal SHOT. Thus, one-shot pulse signal SHOT remains high when output signal CP2 rises. Thus, when output signal CP2 rises, a high level of one-shot pulse signal SHOT is latched by latch circuit 163. Consequently, determination signal LG output from latch circuit 163 transitions from low to high. Thus, when laser beam enters groove 3, determination signal LG goes high, indicating a groove. Determination signal LG remains high until laser beam LB enters land 2.

By contrast, with laser beam LB running on land 2, differential signal DF level initially drops below reference level RL and signal CP2 output from comparator 161 goes low. Then, when differential signal DF level exceeds reference level RL, output signal CP2 returns high. Then, when differential signal DF level exceeds reference level RH, signal CP1 output from comparator 160 goes high. Then, when differential signal DF level drops below reference level RH, output signal CP1 returns low. In synchronization with output signal CP 1 going high, one-shot pulse signal SHOT of predetermined width T1 is generated. Since one-shot pulse signal SHOT has not yet been generated at the low to high transition of output signal CP2, latch circuit 163 latches the low-level signal attained at the low to high transition of output signal CP2. Thus, determination signal LG output from latch circuit 163 transitions from high to low. Determination signal LG remains low until laser beam LB enters groove 3. Thus, determination signal LG is held low when laser beam LB is running on land 2.

Thus, determination circuit 16 produces determination signal LG indicative of a land or a groove depending on differential signal DF. More specifically, laser beam running on land 2 provides determination signal LG of low level and laser beam LB running on groove 3 provides determination signal LG of high level.

Description will now be provided of a track jump operation provided by a magneto-optical disk device configured as above.

Initially, magneto-optical disk 1, mounted to spindle motor 15, is being rotated at a predetermined rotation rate, while optical head 11 scans a single track on disk 1 with a laser beam.

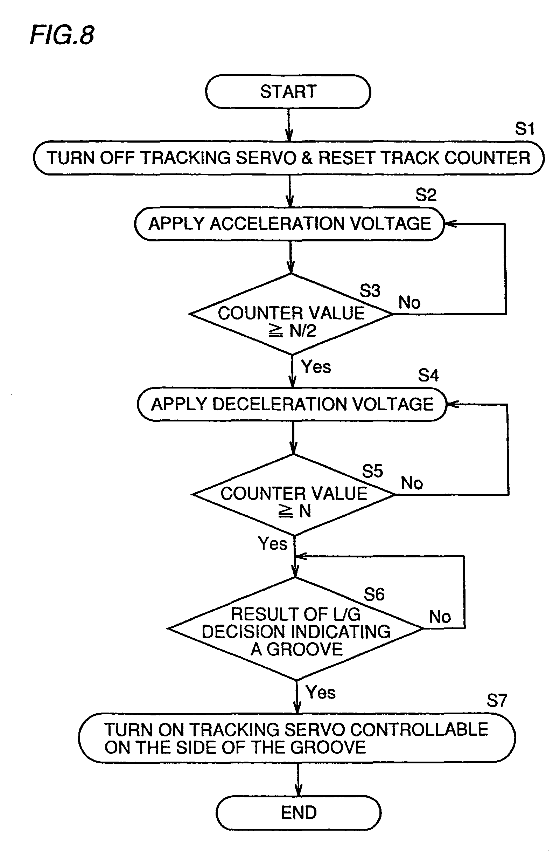

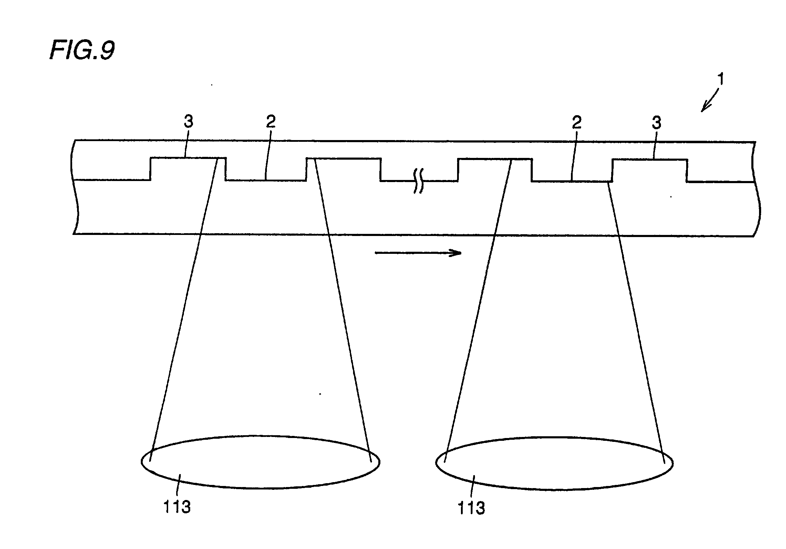

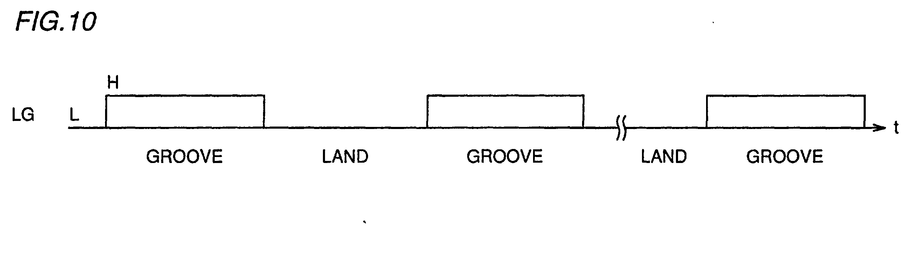

Referring to Fig. 8, to allow the laser beam to jump to a groove N tracks distant from the current track, initially, at step S1, CPU 18 turns off tracking servo in servo circuit 14 and a track counter (not shown) is reset. Then, at step S2, CPU 18 applies a predetermined acceleration voltage across linear actuator 20. Thus optical head 11 traverses magneto-optical disk 1 radially or in a tracking direction thereof, as shown in Fig. 9. Since disk 1 is rotating at the predetermined rotation rate, the laser beam runs on land 2 and groove 3, traversing land 2 and groove 3 alternately. Thus, when a laser beam is traversing grooves 3, a plurality of differential signals DFs as shown in Fig. 4B are produced successively. When a laser beam is traversing lands 2, a plurality of differential signals DFs as shown in Fig. 5B are produced successively. Consequently, with a laser beam running on groove 3, determination circuit 16 outputs determination signal LG of high level, and with a laser beam traversing land 2, determination circuit 16 outputs determination signal LG of low level, as shown in Fig. 10.

Then, at step S3, determination is made as to whether the track counter has attained a value of no less than ^{N}/₂. If the track counter has not yet attained the value of ^{N}/₂, the acceleration voltage is continuously applied. If the track counter has attained the value of no less than ^{N}/₂, CPU 18 replaces the acceleration voltage with a deceleration voltage and applies the deceleration voltage across linear actuator 20 at step S4. In other words, in allowing a laser beam to jump N tracks, optical head 11 is accelerated until the laser beam reaches the intermediate point, and optical head 11 is decelerated when the laser beam goes past the intermediate point. Now the track counter detects tracking error signal TE to count the number of tracks traversed by the laser beam.

Then, at step S5, determination is made as to whether the track counter has attained a value of no less than N. If the track counter has not yet attained the value N, the deceleration voltage is continuously applied. If the track counter has attained the value of no less than N, determination is made at step S6 as to whether the track on which the laser beam is running is a desired groove 3. More specifically, CPU 18 make the determination depending on determination signal LG from determination circuit 16. This determination is continuously made if the track on which the laser beam is running is not groove 3, i.e., if it is land 2. If the track counter counts the number of tracks accurately, the laser beam should now be running on the desired groove 3. However, the laser beam traverses a multitude of tracks rapidly and the track counter cannot always count all the tracks traversed. As a result, a track on which the laser beam is running after it has jumped may be an undesired land 2. However, the laser beam running on land 2 will in turn run on groove 3. Thus, determination signal LG goes high and CPU 18 responsively turns on the tracking servo in servo circuit 14 at step S7. Thus, tracking servo control is initiated for the desired groove.

In this embodiment, as described above, discontinuous groove 4 or discontinuous land 5 formed for recording or reproduction can be detected to determine whether a track on which a laser beam is running is a land or a groove. Furthermore, the determination made as to whether a track on which a laser beam is running is a land or a groove after the laser beam jumps tracks and the initiation of tracking servo control when the laser beam reaches a desired land or groove, enable the laser beam to reliably jump to a desired track.

It should be noted that such track jump operation as described above may be applied not only in recording a signal but in reproducing a signal.

### Second Embodiment

While in the Fig. 1 magneto-optical disk 1 an irregular structure for synchronization for recording or reproduction (i.e., discontinuous groove 4 or discontinuous land 5) is formed in both land 2 and groove 3, the irregular structure may be provided in only one of land 2 and groove 3.

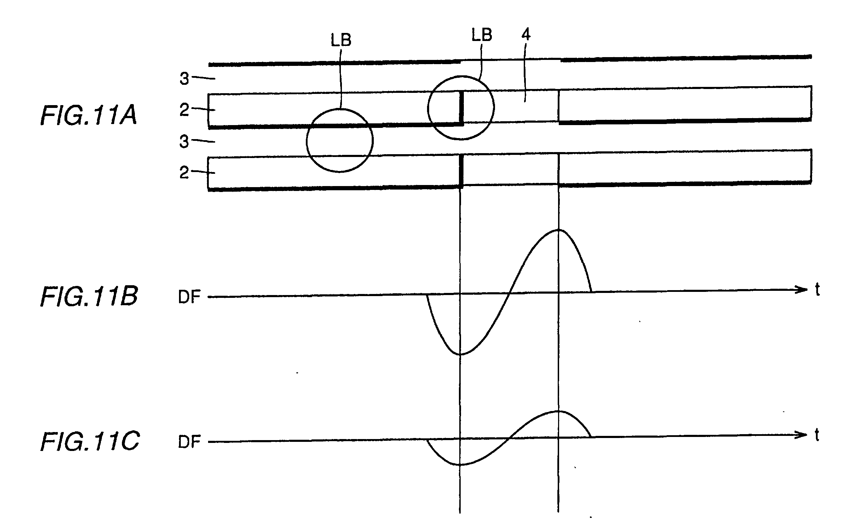

For example, as shown in Fig. 11A, discontinuous groove 4 may be formed only in land 2, while such discontinuous land 5 as shown in Fig. 1 may not be formed in groove 3. Such discontinuous groove 4 can also be detected by photodetector 115 and subtraction circuit 120 shown in Fig. 3.

As shown in Fig. 11A, when a front of laser beam LB running on land 2 reaches discontinuous groove 4, the output from front sensor 62 of photodetector 115 decreases in level and consequently differential signal DF output from subtraction circuit 120 decreases in level, as shown in Fig. 11B. When the center of laser beam LB reaches exactly the front edge of discontinuous groove 4, differential signal DF is minimized in level. Then, when the center of laser beam LB reaches exactly the rear edge of discontinuous groove 4, differential signal DF is maximized in level. Then, when laser beam LB passes across discontinuous groove 4, differential signal DF returns to zero in level.

By contrast, laser beam LB running on groove 3 that moves past an area between discontinuous grooves 4 of adjacent lands 2 provides differential signal DF as represented in Fig. 11C, since laser beam LB, having a diameter larger than the width of groove 3, introduces a difference in output level between front sensor 62 and rear sensor 61 when laser beam LB is located around the front or rear edge of discontinuous groove 4. The difference in output level when laser beam LB is running on groove 3, however, is smaller than when laser beam LB is running on land 2. Thus, the Fig. 11C differential signal DF obtained when laser beam LB is running on groove 3 is smaller in amplitude than the Fig. 11B differential signal DF obtained when laser beam LB is running on land 2. By detecting the difference in amplitude, whether a track on which laser beam LB is running is land 2 or groove 3 can be determined.

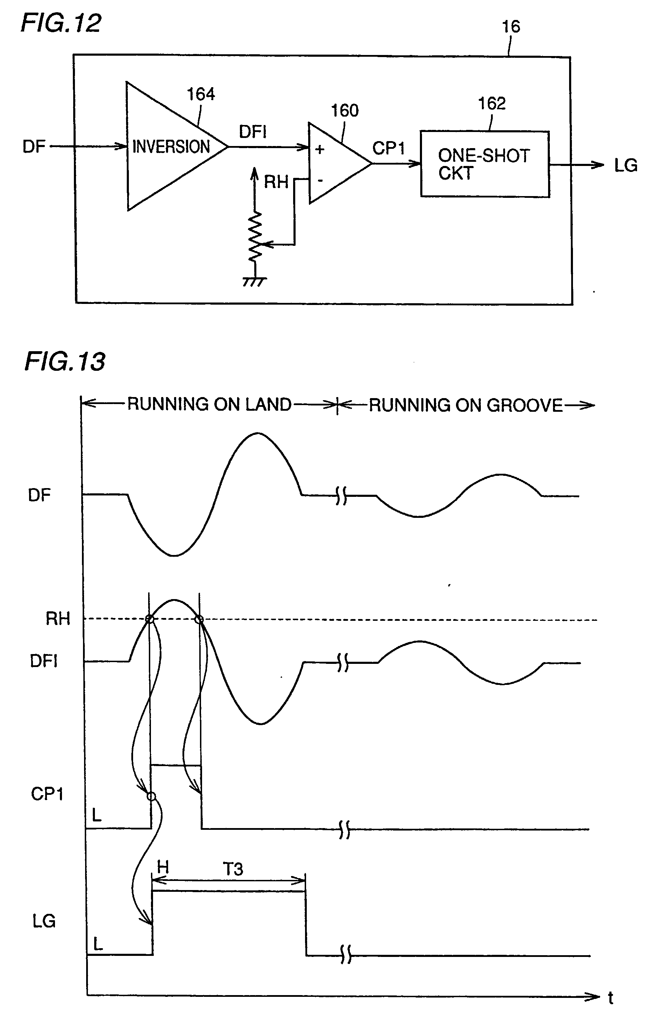

Fig. 12 is a block diagram showing a configuration of a determination circuit 16 disposed to make the land/groove decision in response to differential signals DFs shown in Figs. 11B and 11C. Determination circuit 16 includes an inversion circuit 164 inverting differential signal DF in polarity, a comparator 160 comparing a level of an inverted differential signal DFI from inversion circuit 164 with reference level RH, and a one-shot circuit 162 synchronized with signal CP1 output from comparator 160 to generate and output a one-shot pulse signal of a predetermined width as determination signal LG.

With laser beam LB running on land 2, differential signal DF is initially minimized and then maximized, as shown in Fig. 13. Differential signal DF is inverted by inversion circuit 164 to obtain inverted differential signal DFI which is first maximized and then minimized. When inverted differential signal DFI level exceeds reference level RH, signal CP1 output from comparator 160 goes high. Then, when inverted differential signal DFI level drops below reference level RH, output signal CP1 returns low. In synchronization with such output signal CP 1 going high, a one-shot pulse signal with a predetermined width T3 is obtained and output as determination signal LG. Preferably, width T3 is set to be longer than a differential signal DF appearing period so that determination signal LG remains high when laser beam LB is running on land 2.

By contrast, with laser beam LB running on groove 3, differential signal DF has a small amplitude. Thus, inverted differential signal DFI level will never exceed reference level RH. In other words, reference level RH is set between a maximum level of differential signal DF obtained when laser beam LB is running on a land and a maximum level of differential signal DF obtained when laser beam LB is running on a groove. Thus, with laser beam running on groove 3, signal CP1 output from comparator 160 remains low, never transitioning high. Thus, one-shot pulse circuit 162 does not generate a one-shot pulse signal and consequently determination signal LG remains low.

Thus, with laser beam LB running on land 2, determination circuit 16 in Fig. 12 can generate determination signal LG of high level and with laser beam LB running on groove 3 it can generate determination signal LG of low level to determine whether a track on which laser beam LB is running is a land or a groove.

It should be noted that determination circuit 16 in Fig. 12 may dispense with inversion circuit 164 if a reference level applied to the inversion and amplification terminal of comparator 160 is set between a minimal level of differential signal DF obtained when laser beam LB is running on a land and a minimal level of differential signal DF obtained when laser beam LB is running on a groove. Inversion circuit 164 may also be dispensed with if the output from front sensor 62 shown in Fig. 3 is input to subtraction circuit 120 at the inversion and amplification terminal (-) and that from rear sensor 61 shown in Fig. 3 is also input to subtraction circuit 120 at the non-inversion and amplification terminal (+). Inversion circuit 164 may also be dispensed with if determination signal LG is generated by detecting a maximum level of differential signal DF following a minimum level of differential signal DF.

### Third Embodiment

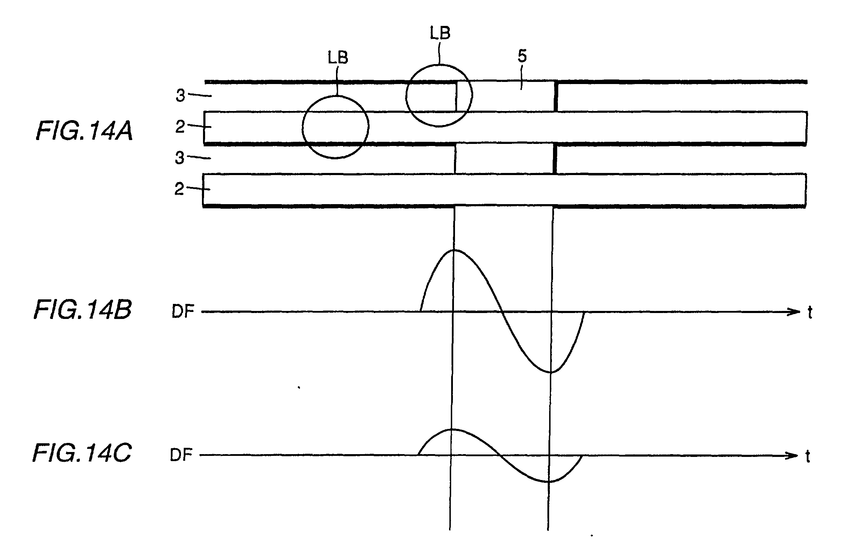

As shown in Fig. 14A, while discontinuous land 5 is formed in groove 3, such discontinuous groove 4 as shown in Fig. 1 may not be formed in land 2.

For such magneto-optical disk, laser beam LB running on groove 3 provides differential signal DF with a large amplitude, as shown in Fig. 14B, when laser beam LB passes across discontinuous land 5. In contrast, laser beam LB running on land 2 provides differential signal DF with a small amplitude, as shown in Fig. 14C, when laser beam LB passes across an area between discontinuous lands 5 of adjacent grooves 3.

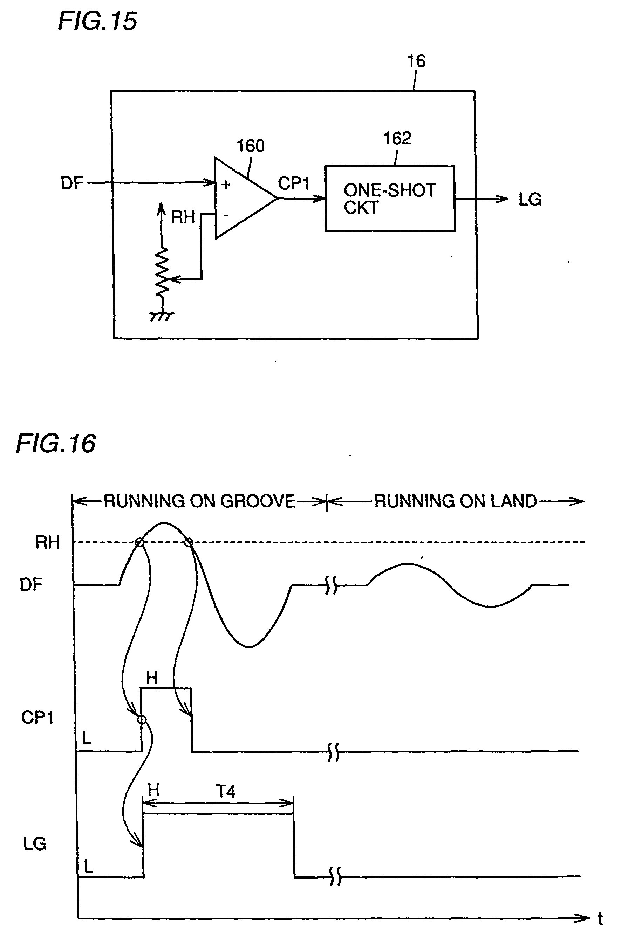

Fig. 15 is a block diagram showing a configuration of a determination circuit which uses such differential signals DFs as shown in Figs. 14B and 14C to determine whether a track on which laser beam LB is running is a land or a groove.

Determination circuit 16 includes comparator 160 comparing differential signal DF level with reference level RH, and one-shot circuit 162 synchronized with signal CP1 output from comparator 160 to generate and output a one-shot pulse signal of a predetermined width as determination signal LG.

As shown in Fig. 16, initially laser beam LB running on groove 3 provides differential signal DF with a large amplitude when laser beam LB passes across discontinuous land 5. Since the maximum level of differential signal DF exceeds reference level RH, signal CP1 output from comparator 160 goes high. In synchronization with output signal CP1 going high, a one-shot pulse with a predetermined width T4 is generated and output as determination signal LG. Width T4 is preferably similar to width T3, set to be longer than the differential signal DF appearing period.

By contrast, laser beam LB running on land 2 provides differential signal DF with a small amplitude when laser beam LB passes across an area between discontinuous lands 5 of adjacent grooves 3. Since the maximum level of differential signal DF does not exceed reference level RH, signal CP 1 output from comparator 160 does not goes high. Thus, a one-shot pulse signal is not generated and determination signal LG remains low. Thus, determination signal LG which goes high when laser beam LB is running on groove 3 and which goes low when laser beam LB is running on land 2 may be used to determine whether a track on which laser beam LB is running is a land or a groove.

### Fourth Embodiment

While the magneto-optical disks shown in Figs. 1, 11A and 14A have discontinuous grooves 4 or discontinuous lands 5, at least one of lands and grooves may have an irregular structure.

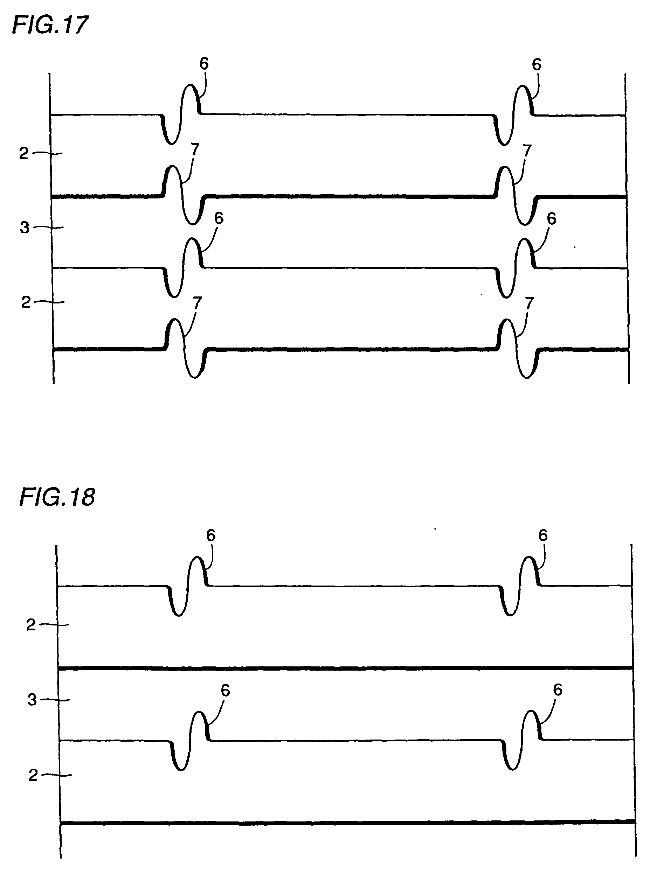

As shown in Fig. 17, for example, a magneto-optical disk may have a fine clock mark 6, 7 for synchronous signal recording or reproduction. In the Fig. 17 magneto-optical disk, groove 3 has opposite sidewalls relatively significantly wobbled in symmetry with respect to the center line of groove 3 to form fine clock marks 6 and 7. In the Fig. 18 magneto-optical disk, groove 3 has one sidewall wobbled to form fine clock mark 6, and the other sidewall formed flat.

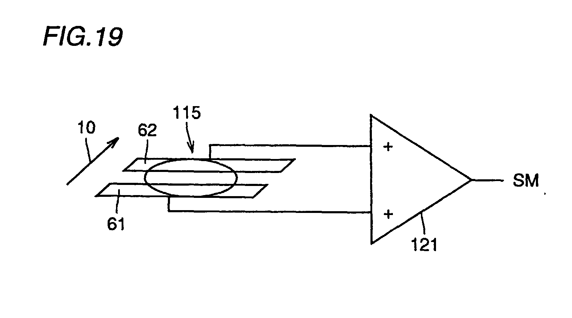

Fig. 19 represents a configuration of photodetector 115 and adder circuit 121 disposed to detect fine clock mark 6, 7 shown in Figs. 17 and 18. Herein, adder circuit 121 replaces subtraction circuit 120 shown in Fig. 3. The output from front sensor 62 of photodetector 115 is input to adder circuit 121 at one input terminal and that from rear sensor 61 of photodetector 115 is input to adder circuit 121 at the other input terminal.

When a laser beam running on groove 3 passes across fine clock mark 6, 7, a summation signal SM6 is obtained having the same polarity as the Fig. 4B differential signal DF. When a laser beam running on land 2 passes across fine clock mark 6, 7, summation signal SM is obtained having the same polarity as the Fig. 5B differential signal DF. Thus, by employing such determination circuit 16 as shown in Fig. 6, such summation signal SM can be used to determine whether a track on which a laser beam is running is a land or a groove.

It should be noted that while fine clock marks 6 and 7 shown in Fig. 17 are formed by wobbling opposite sidewalls of groove 3 to vary the width of groove 3, fine clock marks 6 and 7 may be formed by wobbling opposite sidewalls of groove 3 in a same phase such that groove 3 maintains a same width.

It should also be noted that while the above embodiments describe magneto-optical disks, the present invention is not limited thereto and is applicable to any recording medium of land-and-groove system.

It should be understood that the embodiments disclosed above are merely illustrative and do not limit the invention. It is intended that the scope of the invention is limited only by the term of the appended claims rather than the description provided above and includes all modifications equivalent in meaning and range to the appended claims.

### Industrial Applicability

The present invention is an optical disk device for optical recording medium of land-and-groove system and can be applied particularly to a magneto-optical disk device capable of track-jump operation.

## Claims

1. An optical disk device recording and/or reproducing information to/from an optical disk (1) having a track formed of a land (2) and a groove (3), at least one of said land (2) and said groove (3) having a specific structure (4-7), said optical disk device comprising:
a motor (15) rotating said optical disk (1);
an optical head (11) scanning with a laser beam (LB) said track (2, 3) of said optical disk (1) rotated by said motor (15) to pick up a light reflected from said optical disk (1);
a detection circuit (12) responding to an output signal from said optical head (11) to detect said specific structure (4-7); and
a determination circuit (16) responding to an output signal (DF, SM) from said detection circuit (12) to determine whether a track (2, 3) being scanned by said optical head (11) is said land (2) or said groove (3).

2. The optical disk device of claim 1, further comprising:
an actuator (20) moving said optical head (11) along said optical disk (1) radially; and
a tracking servo unit (14, 116) moving an objective lens (113) provided in said optical head (11) along said optical disk (1) radially to allow said laser bean (LB) to trace said track (2, 3); wherein
after said actuator (20) moves said optical head (11) to allow said laser beam (LB) to jump said track (2, 3), said tracking servo unit (14, 116) starts to operate depending on a result of determination made by said determination circuit (16).

3. The optical disk device of claim 1, wherein:
said optical head (11) includes a photodetector (115) detecting the light reflected from said optical disk (1); and
said photodetector (115) includes first and second sensors (61, 62) aligned in a tangential direction (10) of said track (2, 3).

4. The optical disk device of claim 3, wherein said detection circuit (12) includes a subtraction circuit (120) calculating a difference between output signals from said first and second sensors (61, 62) to produce a differential signal (DF).

5. The optical disk device of claim 4, wherein said determination circuit (16) includes:
a first comparator (160) comparing a level of the differential signal (DF) from said subtraction circuit (120) with a first reference level (RH);
a second comparator (161) comparing the level of the differential signal (DF) from said subtraction circuit (120) with a second reference level (RL);
a one-shot circuit (162) synchronized with an output signal (CP1) from said first comparator (160) to generate a pulse signal (SHOT) having a predetermined width (T1); and
a latch circuit (163) synchronized with an output signal (CP2) from said second comparator (161) to latch the pulsed signal (SHOT) from said one-shot circuit (162).

6. The optical disk device of claim 4, wherein said determination circuit (16) includes:
an inversion circuit (164) inverting a polarity of the differential signal (DF) from said subtraction circuit (120);
a comparator (160) comparing a level of an inverted differential signal (DFI) from said inversion circuit (164) with a reference level (RH); and
a one-shot circuit (162) synchronized with an output signal (CP1) from said comparator (160) to generate a pulse signal (LG) having a predetermined width (T3).

7. The optical disk device of claim 4, wherein said determination circuit (16) includes:
a comparator (160) comparing a level of the differential signal (DF) from said subtraction circuit (120) with a reference level (RH); and
a one-shot circuit (162) synchronized with an output signal (CP1) from said comparator (162) to generate a pulse signal (LG) having a predetermined width (T4).

8. The optical disk device of claim 3, wherein said detection circuit (120) includes an adder circuit (121) calculating a sum of output signals from said first and second sensors (61, 62) to produce a summation signal (SM).

9. The optical disk device of claim 8, wherein said determination circuit (16) includes:
a first comparator (160) comparing a level of the summation signal (SM) from said adder circuit (121) with a first reference level (RH);
a second comparator (161) comparing the level of the summation signal (SM) from said adder circuit (121) with a second reference level (RL);
a one-shot circuit (162) synchronized with an output signal (CP1) from said first comparator (160) to generate a pulse signal (SHOT) having a predetermined width (T1); and
a latch circuit (163) synchronized with an output signal (CP2) from said second comparator (161) to latch the pulse signal (SHOT) from said one-shot circuit (162).

10. An optical disk device recording and/or reproducing information to/from an optical disk (1) having a track formed of a land (2) and a groove (3), comprising:
an optical head (11) including a laser (110), an objective lens (113) focusing a laser beam (LB) from said laser (110) onto said optical disk (1), and a photodetector (115) detecting a light reflected from said optical disk (1);
a determination circuit (16) responding to the reflected light detected by said photodetector (115) to produce a determination signal (LG) indicating which of said land (2) and said groove (3) is being illuminated by said laser beam (LB);
an actuator (20) moving said optical head (11) along said optical disk (1) radially to allow said laser beam (LB) to jump said track (2, 3); and
a tracking servo unit (14, 116) moving said objective lens (113) along said optical disk (1) radially to allow said laser beam (LB) to trace said track (2, 3) in response to the determination signal (LG) from said determination circuit (16) after said actuator (20) allows said laser beam (LB) to jump said track (2, 3).

11. A method of recording and/or reproducing information to/from an optical disk (1) having a track formed of a land (2) and a groove (3), at least one of said land (2) and said groove (3) having a specific structure (4-7), said method comprising the steps of:
scanning said track (2, 3) of said optical disk (1) with a laser beam (LB) emitted from an optical head (11);
detecting a light reflected from said optical disk (1);
responding the detected, reflected light to detect said specific structure (4-7), thereby determining which one of said land (2) and said groove (3) is being scanned by said laser beam (LB);
moving said optical head (11) along said optical disk (1) radially to allow said laser beam (LB) to jump said track (2, 3); and
initiating tracking servo control depending on a result of the step of determining after said laser beam (LB) jumps said track (2, 3).
